# EUROPEAN PATENT APPLICATION

(11) **EP 0 810 707 A2**
(43) Date of publication of application: **03.12.1997**
(21) Application number: 97111929.2
(22) Date of filing: 21.06.1991
(51) Int. Cl.: H02H 3/33

(54) **Earth leakage-current protection system**

(30) Priority: 25.06.1990 JP 164144/90
(62) Divisional of application: 95103759.7
(71) Applicant: HITACHI, LTD., Chiyoda-ku, Tokyo 101 (JP); HITACHI TECHNO ENGINEERING CO., LTD., Tokyo 101 (JP)
(72) Inventor: Suzuki, Yukio, Shibata-shi, Niigata (JP); Ikeda, Yutaka, Shibata-shi, Niigata (JP); Kiryu, Tomiyoshi, Kitakanbara-shi, Niigata (JP); Ishii, Hideo, Shibata-shi, Niigata (JP); Teraoka, Wataru, Shibata-shi, Niigata (JP); Hayakawa, Hideki, Kitakanbara-gun, Niigata (JP)
(74) Representative: Beetz & Partner Patentanwälte

(57) **Abstract**

An earth leakage-current protection system comprises a first and a second earth leakage-current detecting means ELB₃, ELB₂. The first is electrically connected to a load and has a characteristic of sensitivity current vs. frequency which varies with values each below the threshold value having a predetermined characteristic of sensitivity current vs. frequency which is defined for the purpose of protection of the human body. The second has a frequency-characteristic of sensitivity current vs. frequency represented by values each larger than each value indicative of the characteristic of the first earth leakage-current detecting means. When the earth leakage current of a frequency higher than the commercial frequency flows, the first earth leakage-current detecting means is first activated so as to break the earth leakage current which is danger to the human body. The second earth leakage-current detecting means can make a protection coordination with respect to the earth leakage current.

## Description

### BACKGROUND OF THE INVENTION

### Field of the Invention

The present invention relates to an earth leakage-current protection system
that may comprise a plurality of earth leakage breakers and a plurality of earth leakage-current detectors, wherein protection coordination can be taken even when the earth leakage current of a frequency exceeding the commercial frequency flows in each circuit, thereby making it possible to break the earth leakage current having a value greater than the threshold value and to enhance the safety.

### Description of the Related Art

There has heretofore been known a system for protecting earth leakage current from flowing in which the sensitivity current and the action time are only taken into consideration when earth leakage breakers are electrically connected to each other in cascade form so as to make protection coordination.

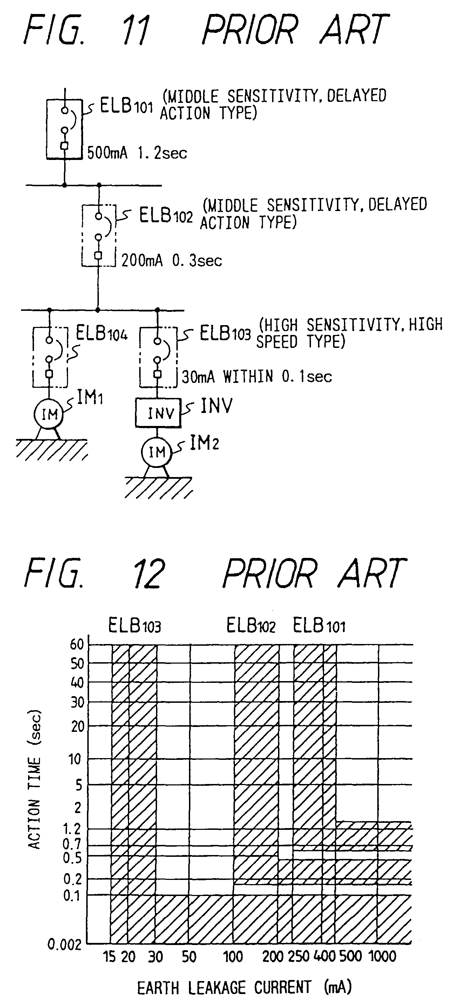

Let's now consider a system, as an example, in which a middle sensitivity, delayed action type earth leakage breaker ELB₁₀₂ (sensitivity current: 200 mA and action time: 0.3 s) is electrically connected in cascade form to the lower stage of a middle sensitivity, delayed action type earth leakage breaker ELB₁₀₁ (sensitivity current: 500mA and action time: 1.2s) electrically connected to the upper stage of a line source, and two high sensitivity, high speed type earth leakage breakers ELB₁₀₃, ELB₁₀₄, for example, are electrically connected to the middle sensitivity, delayed action type earth leakage breaker ELB₁₀₂. Let's now assume that an electric motor IM2 is electrically connected to an electric path on which the earth leakage breaker ELB₁₀₃ is provided, whereas an electric motor IM1 is electrically connected to an electric path on which the earth leakage breaker ELB₁₀₄ is provided, as illustrated in FIG. 11. FIG. 12 shows a characteristic for describing the operation of each of the earth leakage breakers ELB₁₀₁ to ELB₁₀₃. When a ground fault or accident takes place in the electric motor IM2 of the earth leakage-current protection system, for example, the earth leakage breaker ELB₁₀₃ detects this state so as to electrically break the electric path.

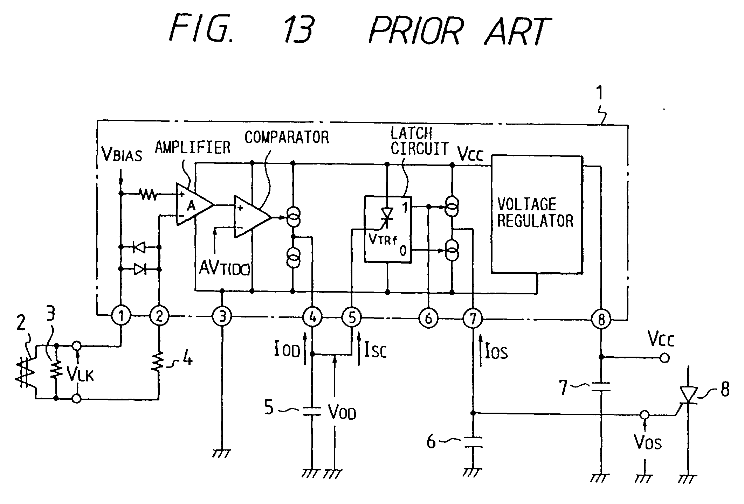

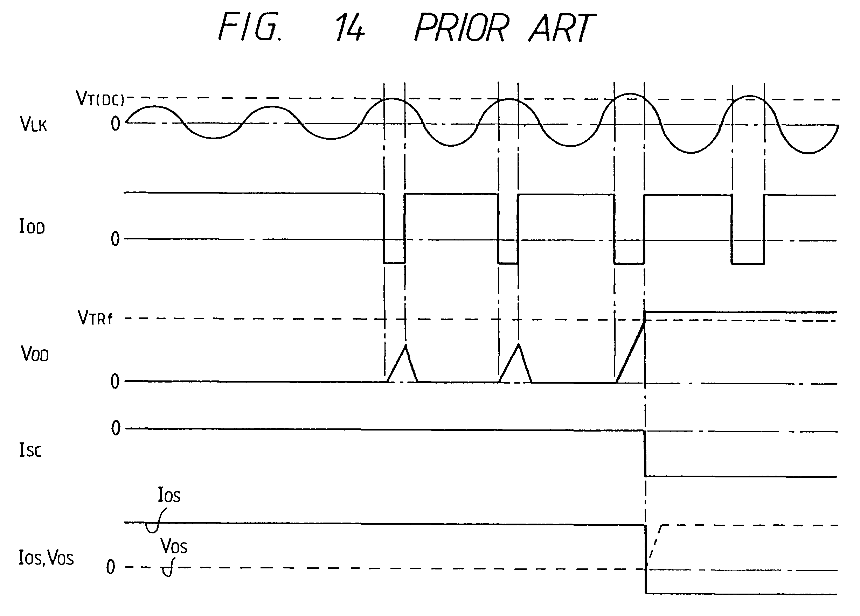

FIG. 13 is a diagram showing an essential part of an earth leakage-current detector employed in the conventional high sensitivity, high speed type earth leakage breaker ELB₁₀₃. FIG. 14 is a diagram for describing each of waveforms obtained at respective parts of the earth leakage-current detector. Incidentally, an area enclosed with the dashed line in FIG. 13 shows a part formed by a monolithic IC.

Output current on the secondary side of a zero-phase current transformer (hereinafter called "ZCT") 2 provided on an electric path as an object to detect the earth leakage current is converted into a voltage V_{LK} by means of a resistor 3. Then, the voltage V_{LK} is amplified by an amplifier in an IC1, and thereafter the thus-amplified voltage is compared with a reference voltage AV_{T(DC)} by a comparator in the IC1. The comparator outputs constant current I_{OD} when V_{LK}≥AV_{T(DC)}, and a capacitor 5 is charged by this current I_{OD}. When a period set so as to be V_{LK}≥AV_{T(DC)} is short, a period required to charge the capacitor 5 becomes shorter, and a terminal voltage V_{OD} of the capacitor 5 is discharged before it reaches a predetermined value. However, when the period set so as to be V_{LK}≥AV_{T(DC)} is long, the capacitor 5 is further charged and hence the terminal voltage V_{OD} thereof reaches the predetermined value. As a consequence, its terminal voltage exceeds a trigger voltage of a latch circuit, and a thyristor 8 is activated by an output at a pin ⑦ of the IC1. Thus, an unillustrated opening/closing contact is opened so as to electrically disconnect the electric path.

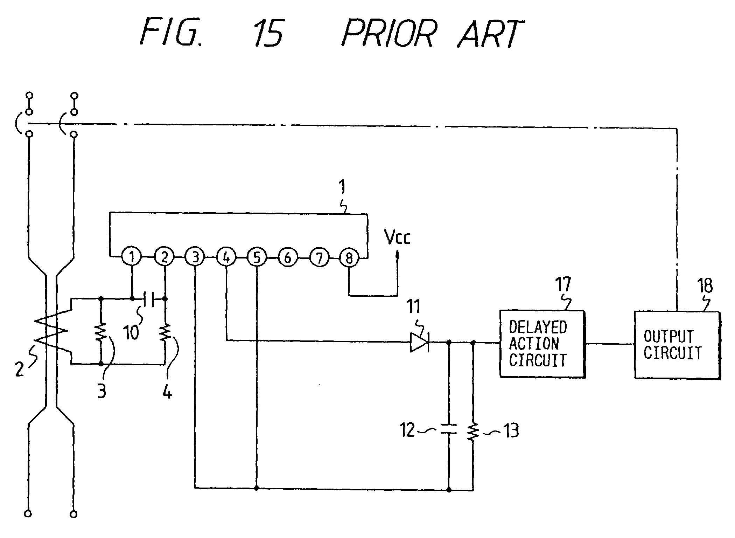

FIG. 15 is a diagram showing an essential part of an earth leakage-current detector employed in the conventional middle sensitivity, delayed action type earth leakage breaker ELB₁₀₂. Incidentally, an internal circuit in the IC1 is identical to that shown in FIG. 13. Output current on the secondary side of the ZCT2 provided on an electric path as an object to detect the earth leakage current is converted into a current and/or voltage by a resistor 3. The thus-converted output is inputted to an amplifier in the IC1 through a low-pass filter which comprises a resistor 4 and a capacitor 10. Then, a signal outputted to a pin ④ from a comparator serves to charge a capacitor 12 through a diode 11 electrically connected thereto in the forward direction. When a terminal voltage of the capacitor 12 reaches a predetermined value, an interrupting signal is outputted to an output circuit 18 through a delayed action circuit 17.

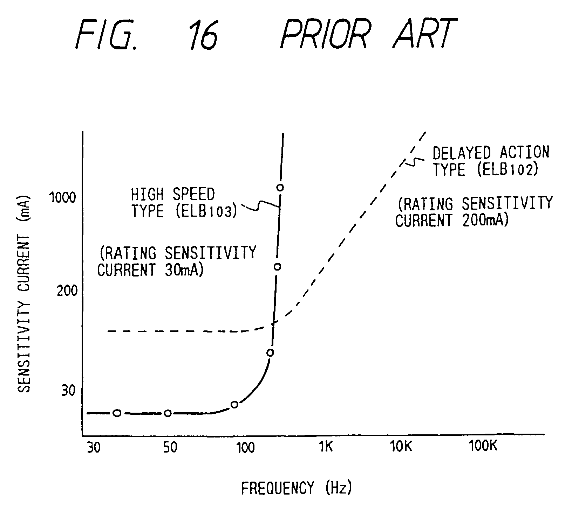

In the conventional earth leakage-current protection system, the commercial frequency is defined as an object. It is also unnecessary to take into consideration frequencies above the commercial frequency. However, electrical equipment such as an air conditioner driven by an inverter has recently been increased. As a consequence, the frequency of the earth leakage current is often higher than the commercial frequency. When the electric motor IM2 is driven by an inverter INV to thereby cause a ground fault or accident as shown in FIG. 11, earth leakage current of a high frequency such as 20KHz flows through the electric path. When the leakage current of 20KHz flows through the same, a period of charging current used to charge the capacitor 5 becomes shorter and hence the terminal voltage V_{OD} of the capacitor 5 no longer reaches a predetermined value for performing the disconnection of the flow of the earth leakage current in the conventional earth leakage breaker ELB₁₀₃. More specifically, as shown in FIG. 16, the characteristic of sensitivity current vs. frequency of the conventional high sensitivity, high speed type earth leakage breaker ELB₁₀₃ is abruptly raised when its frequency reaches a frequency exceeding the commercial frequency. Therefore, the electric path referred to above is no longer interrupted in the conventional high sensitivity, high speed type earth leakage breaker ELB₁₀₃ even when the earth leakage current of such a high frequency flows through the electric path, - for example, the earth leakage current having a value above the threshold value defined by the International Electrotechnical Commission (IEC) 479-2 flows, thereby involving a risk.

On the other hand, in the conventional middle sensitivity, delayed action type earth leakage breaker ELB₁₀₂, the output current on the secondary side of the ZCT2 is converted into the current and/or voltage by the resistor 3, and the thus-converted output is inputted to the differential amplifier of the IC1 through the low-pass filter which comprises the resistor 4 and the capacitor 10. Thus, when the input frequency is high, the signal inputted to the differential amplifier is low in level, so that the output of the differential amplifier is reduced in level. Therefore, the earth leakage current is no longer detected unless large earth leakage current flows with an increase in the frequency. Namely, it can be judged that the characteristic of the sensitivity current vs. the frequency of the middle sensitivity, delayed action type earth leakage breaker shows that when the input frequency becomes high, the sensitivity current is substantially rendered high. However, the manner of rise in the sensitivity current is that as shown in FIG. 16, the abrupt rise in the sensitivity current as in the high speed type earth leakage breaker is not represented but a gentle rise in the sensitivity current is shown.

When the earth leakage current of 20kHz, for example, flows in the electric motor IM2 in the earth leakage-current protection system shown in FIG. 11, the frequency characteristics of both the high sensitivity, high speed type earth leakage breaker ELB₁₀₃ and the middle sensitivity, delayed action type earth leakage breaker ELB₁₀₂ are varied as illustrated in FIG. 16. Therefore, the high sensitivity, high speed type earth leakage breaker ELB₁₀₃ cannot detect such earth leakage current, thereby causing the electrical disconnection of the electric path by the middle sensitivity, delayed action type earth leakage breaker ELB₁₀₂. As a consequence, even the electric motor IM1 unnecessary to stop its rotation is deactivated. Namely, the earth leakage-current protection system has the problem in that no protection coordination can be made in the region of the frequency above the commercial frequency.

The above-described conventional earth leakage-current protection system does not take into consideration any measure for preventing the same from being malfunctioned by the earth leakage current of the high frequency as described above. As disclosed in Japanese Patent Publication Laid-Open Nos. 61-161921 and 61-154422, for example, the disclosure indicates that necessary measures have merely been taken to avoid the disconnection of the electric path, judging that when one-shot type and aperiodic surge current and noise current flow through the electric path, they are leakage current.

As an alternative to the above earth leakage-current protection system, there is known one disclosed in Japanese Patent Publication Laid-Open No. 61-128719. However, this disclosure is of such a type that a train of pulses each having the pulse width which is in the ratio constant to the voltage of the electric path or the period of the current are generated so as to compare the level of such pulse train and that of the output of an earth leakage-current detecting circuit, thereby interrupting the electric path when the output of the earth leakage-current detecting circuit is greater in level than the pulse train. According to the disclosure of Japanese Patent Publication Laid-Open No. 61-128719, operable frequencies vary depending on variations in frequencies of the electric path. Therefore, the operating ranges of earth leakage breakers provided both on the upper and lower stages are varied when they are electrically connected to each other in cascade form, thereby causing a difficulty in the protection coordination.

### SUMMARY OF THE INVENTION

It is an object of the present invention to provide an earth leakage-current protection system of a type wherein even when earth leakage current of a frequency exceeding a commercial frequency flows, protection coordination can be made so as to electrically interrupt the flow of the earth leakage current of a value greater than the threshold value, thereby making it possible to enhance the safety and to provide earth leakage breakers and earth leakage-current detectors both of which constitute the earth leakage-current protection system.

According to one aspect of the present invention, there is provided an earth leakage-current protection system including a first earth leakage-current detecting means electrically connected to a load and a second earth leakage-current detecting means provided on the upper stage of the first earth leakage-current detecting means, the earth leakage-current protection system characterized in that the first earth leakage-current detecting means has a first frequency-characteristic applying means for applying a characteristic of sensitivity current vs. frequency, which varies with values each below the threshold value having a predetermined characteristic of sensitivity current vs. frequency which is defined for the purpose of protection of the human body, and the second earth leakage-current detecting means has a second frequency-characteristic applying means for providing a characteristic of sensitivity current vs. frequency which is represented by values each larger than each value indicative of the characteristic of the first earth leakage-current detecting means.

According to another aspect of the present invention, there is provided an earth leakage breaker comprising a first earth leakage-current detecting means, preferably, an earth leakage-current detecting means, a first frequency-characteristic applying means electrcally connected to the earth leakage-current detecting means so as to apply a characteristic of sensitivity current vs. frequency which varies with values each below the threshold value having a predetermined characteristic of sensitivity current vs. frequency which is defined for the purpose of protection of the human body, and an output means electrically connected to the first frequency-characteristic applying means.

According to a further aspect of the present invention, there is provided an earth leakage breaker comprising a second earth leakage-current detecting means, preferably, an earth leakage-current detecting means, a second frequency-characteristic applying means electrically connected to the earth leakage-current detecting means so as to provide a characteristic of sensitivity current vs. frequency which is abruptly raised at each value greater than the threshold value having a predetermined characteristic of sensitivity current vs. frequency defined for the purpose of protection of the human body and at a frequency exceeding the commercial frequency, and an output means electrically connected to the second frequency-characteristic applying means.

When the earth leakage current of the frequency higher than the commercial frequency flows, the first earth leakage-current detecting means is first activated to break the earth leakage current which subjects the human body to danger. Since the second earth leakage-current detecting means has the characteristic of sensitivity current vs. frequency which is represented by values each larger than each value indicative of the characteristic of the first earth leakage-current detecting means, the protection coordination can be taken, thereby making it possible to prevent others from being influenced by a power failure produced by a ground fault or accident.

According to the present invention, the earth leakage-current protection system having superb safety can be achieved because any accident produced by the earth leakage current at a wide range of frequencies can be prevented by carrying out the protection coordination.

The above and other objects, features and advantages of the present invention will become apparent from the following description and the appended claims, taken in conjunction with the accompanying drawings in which preferred embodiments of the present invention are shown by way of illustrative example.

### BRIEF DESCRIPTION OF THE DRAWINGS

FIG. 1 is a diagram showing a structure of an earth leakage-current protection system according to one embodiment of the present invention;
FIG. 2 is a diagram illustrating each characteristic of sensitivity current vs. frequency of each earth leakage breaker (comprising an earth leakage relay and an earth leakage-current detector) according to one embodiment of the present invention;
FIG. 3 is a graph for describing the relationship between each frequency and each frequency factor;
FIG. 4 is a diagram showing a main part of an earth leakage-current detector employed in a high sensitivity, high speed type earth leakage breaker according to one embodiment of the present invention;
FIG. 5 is a diagram illustrating a main part of an earth leakage-current detector used in a middle sensitivity, delayed action type earth leakage breaker according to one embodiment of the present invention;
FIG. 6 is a diagram for describing each of waveforms at respective portions of a circuit shown in FIG. 5;
FIG. 7 is a diagram showing a main part of an earth leakage-current detector used in a middle sensitivity, delayed action type earth leakage breaker according to another embodiment of the present invention;
FIG. 8 is a diagram for describing each of waveforms at respective portions of a circuit shown in FIG. 7;
FIG. 9 is a diagram depicting a main part of an earth leakage-current detector used in a high sensitivity, high speed type earth leakage breaker according to another embodiment of the present invention;
FIG. 10 is a diagram illustrating a main part of an earth leakage-current detector employed in a middle sensitivity, delayed action type earth leakage breaker according to a further embodiment of the present invention;
FIG. 11 is a diagram showing a structure of a conventional earth leakage-current protection system used to protect current of a commercial frequency from leaking;
FIG. 12 is a diagram for describing a characteristic of each of earth leakage breakers shown in FIG. 11;
FIG. 13 is a diagram illustrating a main part of an earth leakage-current detector employed in a conventional high sensitivity, high speed type earth leakage breaker;
FIG. 14 is a diagram for describing each of waveforms at respective portions of a circuit shown in FIG. 13;
FIG. 15 is a diagram showing a main part of an earth leakage-current detector employed in a conventional middle sensitivity, delayed action type earth leakage breaker; and
FIG. 16 is a diagram for describing characteristics of sensitivity current vs. frequency of the conventional earth leakage breaker shown in FIG. 15.

### DETAILED DESCRIPTION OF THE PREFERRED EMBODIMENTS

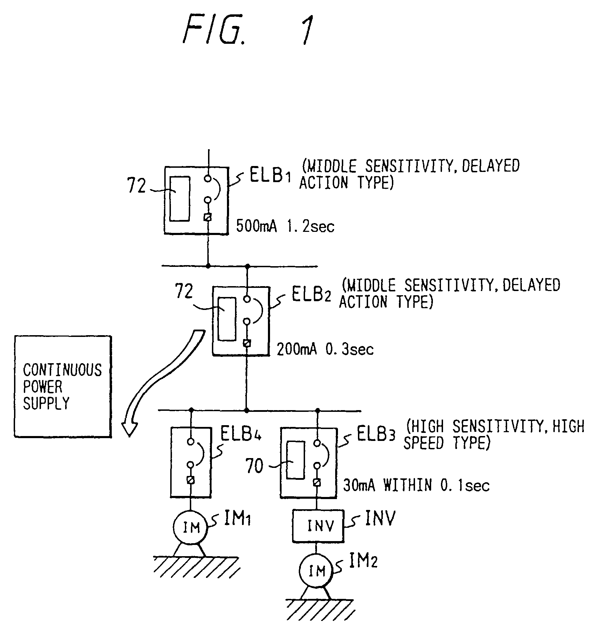

Preferred embodiments of the present invention will hereinafter be described with reference to FIGS. 1 through 10.

An earth leakage-current protection system according to one embodiment of the present invention will now be described in accordance with FIGS. 1 through 6.

FIG. 1 is a diagram for describing a structure of the earth leakage-current protection system according to the present embodiment. A high sensitivity, high speed type earth leakage breaker ELB₃ as a first earth leakage-current detecting means is provided on the side of an electric path of an electric motor IM2 driven by an inverter INV, and a middle sensitivity, delayed action type earth leakage breaker ELB₂ as a second earth leakage-current detecting means is disposed in the upstream side of the electric path thereof, whereby protection coordination is made therebetween. Furthermore, a middle sensitivity, delayed action type earth leakage breaker ELB₁ used to make protection coordination with respect to the earth leakage breaker ELB₂ is provided on the most upstream side thereof.

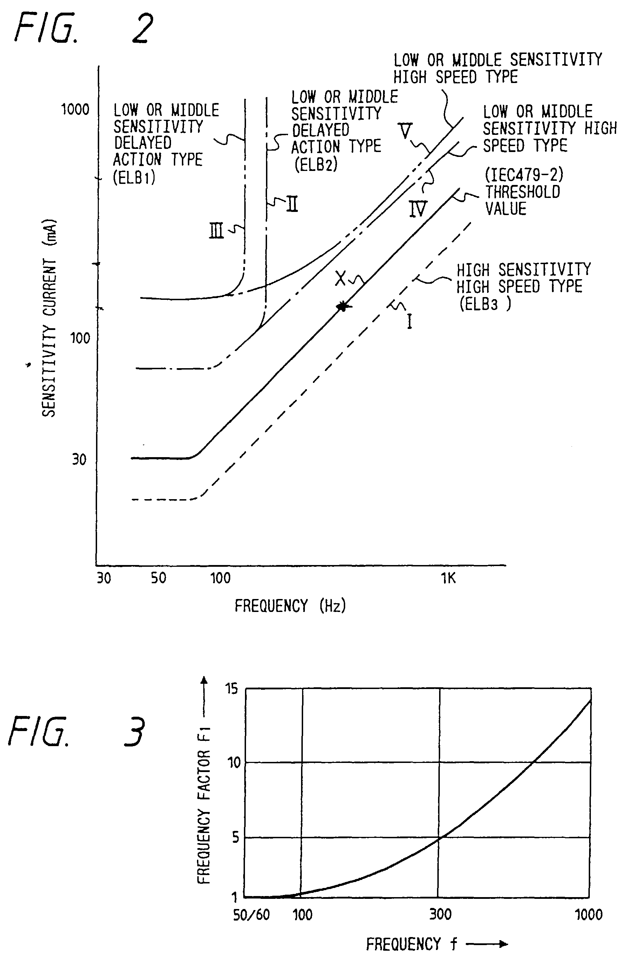

Let' now assume that a characteristic of sensitivity current vs. frequency of the high sensitivity, high speed type earth leakage breaker ELB₃ is represented by a curve I shown in FIG. 2 in which the sensitivity current is flat up to about 75 Hz and it increases at a given inclination when it exceeds this frequency, a characteristic of sensitivity current vs. frequency of the middle sensitivity, delayed action type earth leakage breaker ELB₂ is represented by a curve II in which the sensitivity current is flat up to about 90 Hz with each value being larger than that at the curve I and it increases at a predetermined inclination when it exceeds this frequency and is abruptly raised at about 150 Hz, and a characteristic of sensitivity current vs. frequency of the middle sensitivity, delayed action type earth leakage breaker ELB₁ is represented by a curve III wherein the sensitivity current is flat up to about 100 Hz and has each value larger than that at the curve II, and it is abruptly raised at about 120 Hz when it exceeds 100 Hz. A characteristic curve obtained by converting each threshold value ("threshold value of sensation" or "threshold value of ventricular fibrillation" described in "Effects of Electrical Current Passing Through The Body") of an IEC479-2 into a rating sensitivity current of 30mA using the relationship between each frequency and each frequency factor shown in FIG. 3, is represented by a solid line X of FIG. 2. More specifically, the characteristic curve I is set in such a manner that it is disposed below the solid line X and parallel with the solid line X over the entire frequency regions. The characteristic curves II and III are set so that the sensitivity current is abruptly raised upwards at a frequency exceeding a commercial frequency. The characteristic curve III is set such that the sensitivity current is raised at a frequency near the commercial frequency.

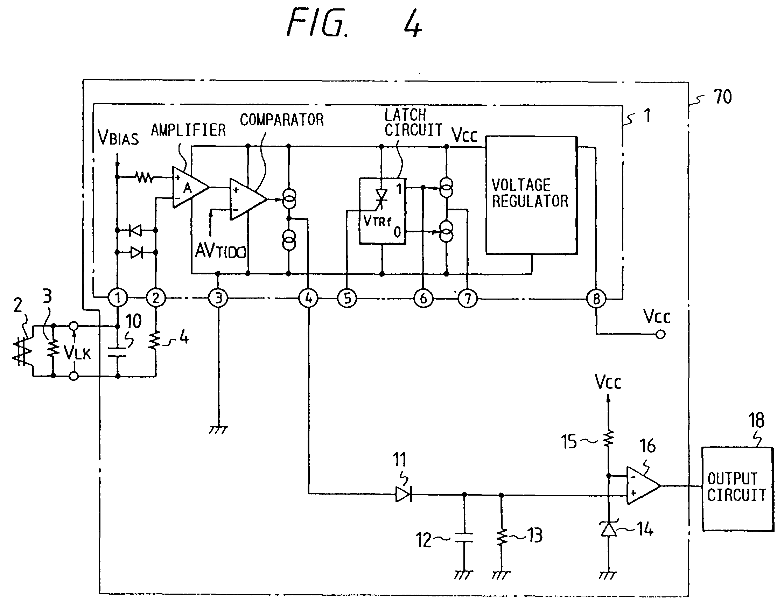

FIG. 4 is a diagram showing an essential part of an earth leakage-current detector employed in the high sensitivity, high speed type earth leakage breaker ELB₃ according to the present embodiment. An IC1 has the following internal structure. More specifically, the IC1 has at its inside an amplifier, a comparator, a latch circuit, a voltage regulator, and a current regulator. The amplifier has a positive input terminal thereof electrically connected through a resistor to a power supply V_{BIAS} and a negative terminal thereof electrically connected to a pin ② serving as an input terminal. The power supply V_{BIAS} is electrically connected to a pin ① serving as an output terminal, and used to supply the current to a ZCT2 connected to an external unit. The output of the amplifier is electrically connected to a positive input terminal of the comparator. A negative input terminal of the comparator is electrically connected to a reference voltage AV_{T(DC)}. The output of the comparator is used to control a current source electrically connected thereto whose output is applied to a pin ④. The latch circuit has an input thereof electrically connected to a pin ⑤, and non-converted outputs electrically connected to pins ⑥, ⑦, respectively. The output from the latch circuit is applied directly to the pin ⑥, and is applied via the current source to the pin ⑦. The amplifier, the comparator, the latch circuit and the current source are supplied with a source voltage V_{CC} from the voltage regulator and have ground terminals thereof electrically connected to the output on the ground side of the voltage regulator. The voltage regulator has an input terminal thereof electrically connected to a pin ⑧ so as to be supplied with the source voltage V_{CC}, and also an output on the ground side thereof, which is electrically connected to the pin ③.

In the present embodiment, the IC1, a low-pass filter comprising a resistor 4 and a capacitor 10 electrically connected to the pins ①, ②, respectively, of the IC1, and a circuit from a diode 11 electrically connected to the pin ④ of the IC1 to a comparator 16 are operated as a first frequency-characteristic applying means 70.

In the conventional high sensitivity, high speed type earth leakage breaker, output current on the secondary side of the ZCT2 is converted into a voltage only by means of a resistor 3. However, in the present embodiment, the output current on the secondary side of the ZCT2 is converted into a current and/or voltage by means of a resistor 3, and the thus-converted output is inputted to each of pins ① and ② of the IC1 through the low-pass filter comprising the resistor 4 and the capacitor 10. Therefore, when a frequency of earth leakage current is rendered high, the difference in level between the input signals becomes small. Thus, the breaker does not detect the earth leakage current unless a value of the earth leakage current becomes large. A voltage V_{LK} obtained by converting the output current into the voltage by the resistor 3 as described above is amplified in the amplifier provided within the IC1, and thereafter the thus-amplified voltage is compared with a reference voltage AV_{T(DC)} by the comparator in the IC1. The comparator outputs constant current when V_{LK}≥AV_{T(DC)}, and a capacitor 5 is hence charged by this current. The comparator 16 provided outwardly of the IC1 compares a terminal voltage of the capacitor 12 and a reference voltage. If the terminal voltage of the capacitor 12 exceeds the reference voltage, then a signal for detecting the earth leakage current is supplied to an output circuit 18 from the comparator 16. In this time, the output of the pin ④ is supplied to the capacitor 12 through a forward diode 11. Therefore, the capacitor 12 is prevented from being discharged to the side of the pin ④ by means of the forward diode 11. When the leakage current of the value above the threshold value flows at a range of a high frequency exceeding the commercial frequency, the terminal voltage referred to above can reliably exceed the reference voltage of the comparator 16. Thus, the characteristic represented by the curve I in FIG. 2 can be realized.

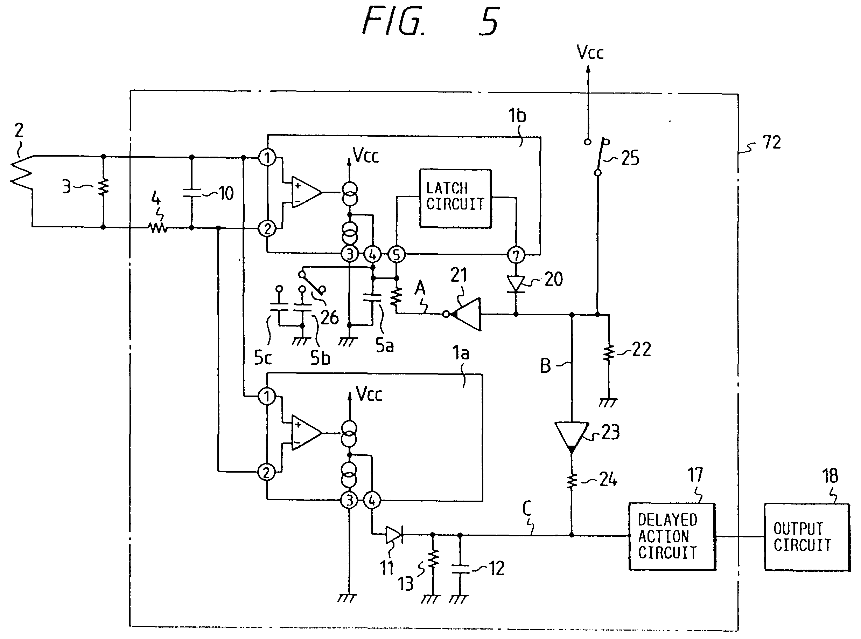

FIG. 5 is a diagram showing an essential part of an earth leakage-current detector employed in the middle sensitivity, delayed action type earth leakage breaker ELB₂ according to the present embodiment. Each of the insides of IC1a and IC1b in the drawing is structurally identical to that of the IC1, and parts of structure which are not concerned in functions required in the present embodiment will therefore be omitted. In the middle sensitivity, delayed action type earth leakage breaker employed in the present embodiment, in order to represent a characteristic of sensitivity current vs. frequency by each of the curves II and III shown in FIG. 2, two ICs are used to obtain a middle sensitivity, delayed action type characteristic with one IC1a of both ICs and to obtain a high sensitivity, high speed type characteristic with the other IC1b. The output current on the secondary side of the ZCT2 provided on the electric path as the object for detecting the earth leakage current is converted into a current and/or voltage by means of a resistor 3, and the thus-converted output is applied to each of pins ① and ② of the IC1a and IC1b through a low-pass filter comprising a resistor 4 and a capacitor 10.

In the present embodiment, the IC1a, the IC1b, the low-pass filter circuit comprising the capacitor 10 and the resistor 4 electrically connected to the pins ①, ②, respectively, of the IC1a, a circuit from each IC to a delayed action circuit 17, and the delayed action circuit 17 are operated as a second frequency-characteristic applying means 72.

A capacitor 12 is charged by an output at a pin ④ through a forward diode 11 in the IC1a. In addition, a terminal output of the capacitor 12 is supplied to an output circuit 18 through the delayed action circuit 17.

A capacitor 5a is charged by the output at the pin ④ in the IC1b. In the present embodiment, either a capacitor 5b or a capacitor 5c is electrically connected to the capacitor 5a in parallel with each other by means of a characteristic changeover switch 26. A terminal voltage of the capacitor 5a is supplied to a pin ⑤ of the IC1b, and an output of an inverter 21 is applied to the pin ⑤ thereof through a resistor. In addition, a forward diode 20 is connected between a pin ⑦ of the IC1b and an input of the inverter 21. The input of the inverter 21 is coupled to a voltage terminal of the capacitor 12 through a buffer 23 and a resistor 24. Further, a resistor 22 is interposed between the input of the inverter 21 and the earth, and a reference potential or voltage V_{CC} is applied to the input of the inverter 21 through a switch 25.

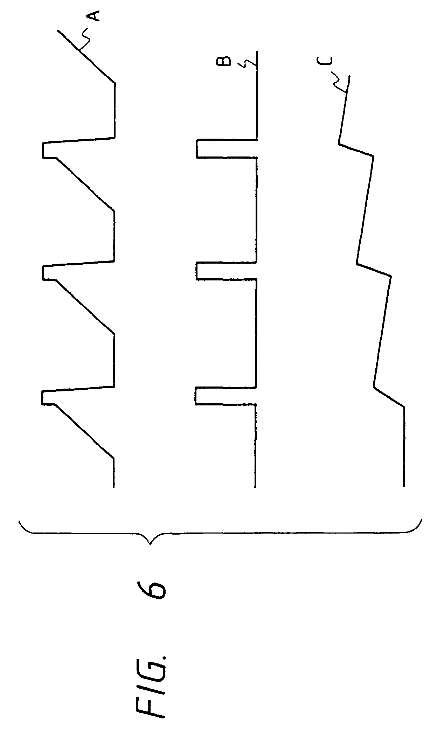

The operation of an earth leakage-current detector of the middle sensitivity, delayed action type earth leakage breaker ELB₂ employed in the present embodiment will now be described with reference to waveforms shown in FIG. 6.

When there is a possibility of the fact that the inverter is electrically connected to the downstream side of the electric path and the earth leakage current of a frequency exceeding the commercial frequency flows, the switch 25 is separated from being electrically connected to V_{CC} side. Thus, the terminal voltage of the capacitor 12 depends upon the output of the pin ⑦ of the IC1b. Let's now assume that the ZCT2 detects earth leakage current of the commercial frequency, and signals based on the output current on the secondary side are inputted to the IC1a, IC1b. When the capacitor 5a is charged by the output at the pin ④ of the IC1b and the terminal voltage of the capacitor 5a reaches a predetermined value (a waveform of the terminal voltage is represented by a symbol A of FIG. 6), a latch circuit latches the terminal voltage thereof and outputs a predetermined voltage from the pin ⑦. The inverter 21 discharges electric charges stored in the capacitor 5a according to the output of the pin ⑦ and reset, i.e., places the output of the pin ⑦ into the zero state. A waveform of the output of the pin ⑦ is represented by a symbol B of FIG 6. Then, the output of the pin ⑦ is applied across the terminals of the capacitor 12 through the buffer 23 and the resistor 24, so as to prevent the capacitor 12 from being discharged. The terminal voltage of the capacitor 12 is gradually increased as indicated at a symbol C of FIG. 6 by setting the time constant for charging the capacitor 12 so as to be shorter than that for discharging the same. When the terminal voltage of the capacitor 12 reaches a predetermined value, an interrupting signal is outputted to the output circuit 18 through the delayed action circuit 17.

On the other hand, when the leakage current of the frequency exceeding the commercial frequency flows, the terminal voltage of the capacitor 12 is gradually increased according to the output of the pin ④ of the IC1a. Namely, a characteristic of the sensitivity current vs. frequency on the side of the IC1a is represented by a curve in which the sensitivity currant is gradually increased with an increase in the frequency. On the other hand, the period of the output at the pin ④ on the IC1b side becomes shorter and the time necessary to charge the capacitor 5 also becomes short. Therefore, the potential or voltage of the capacitor 5 is not raised and hence its terminal voltage does not reach a trigger voltage of the following latch circuit. As a consequence, the output at the pin ⑦ of the IC1b is still in a low level and hence the output side of the buffer 23 is sunk. Thus, the current discharged from the capacitor 12 passes through a traveled route formed by the resistor 24 and the buffer 23 so as to escape, and the delayed action circuit 17 and the output circuit 18 are not operated. As a result, the middle sensitivity, delayed action type earth leakage breaker ELB₂ is not activated at the range of the frequency exceeding the commercial frequency and hence the sensitivity current becomes infinite. Therefore, the curves indicative of characteristics of the sensitivity current vs. frequency of the whole circuit shown in FIG. 5 are abruptly raised as illustrated in the curves II, III of FIG. 2. The change in the cutoff frequency, i.e., the determination of either the curve II or III can be performed by changing the capacity of the capacitor to be charged by the output at the pin ④ of the IC1b. Namely, the earth leakage breaker in the present embodiment can be used as the middle sensitivity, delayed action type earth leakage breaker ELB₁ by the changeover action of the switch 26. The arrangement of the switch 26 permits adjustment or changeover of the characteristics of the earth leakage breaker or the like. It is therefore possible to set an earth leakage-current protection system adequate for the purpose. The switch 26 may be provided in such a manner that a user cannot change over the same at his discretion by performing the brazing or the like after the earth leakage-current protection system has been established. In addition, the switch 26 may be set in such a manner that various characteristics of the earth leakage breaker are changed over simultaneously by causing the switch 26 so as to be operable with an unillustrated sensitivity current changeover switch or an action-time changeover switch.

When a load through which the earth leakage current of the frequency exceeding the commercial frequency flows does not exist in the downstream side of the electric path of the middle sensitivity, delayed action type earth leakage breaker in the present embodiment, the function identical to that of the conventional middle sensitivity, delayed action type earth leakage breaker is enough to suffice the function of the middle sensitivity, delayed action type earth leakage breaker employed in the present embodiment. Therefore, the switch 25 is electrically connected to the V_{CC} side in such a case. As a consequence, the input side of the buffer 23 is rendered high in level at all times, and hence the terminal voltage of the capacitor 12 have no connection with the output at the pin ⑦ of the IC1b. Namely, the circuit shown in FIG. 5 substantially has the characteristics identical to those in the conventional middle sensitivity, delayed action type circuit. The earth leakage breaker which can be employed in the earth leakage-current protection system of the present invention is not necessarily limited to the above-described embodiment.

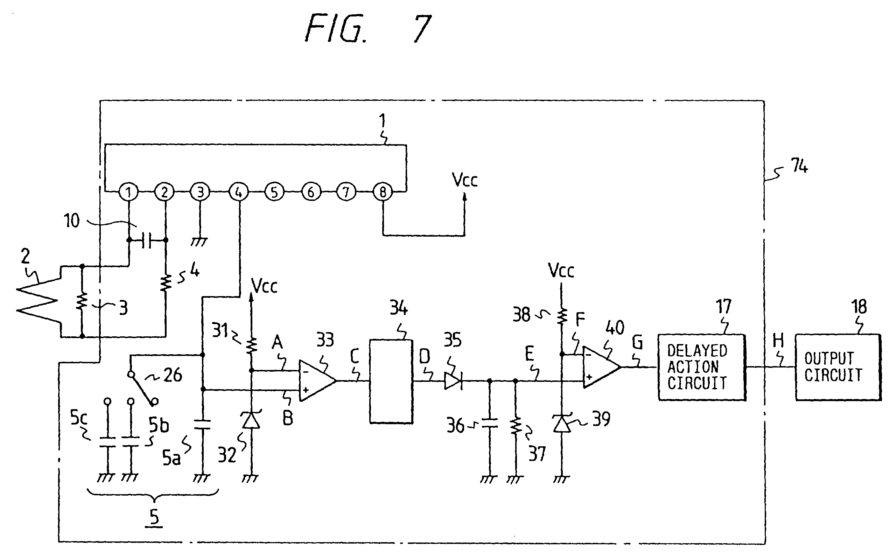

Other embodiments of a middle sensitivity, delayed action type earth leakage breaker and a high sensitivity, high speed type earth leakage breaker will now be described with reference to FIGS. 7 through 10.

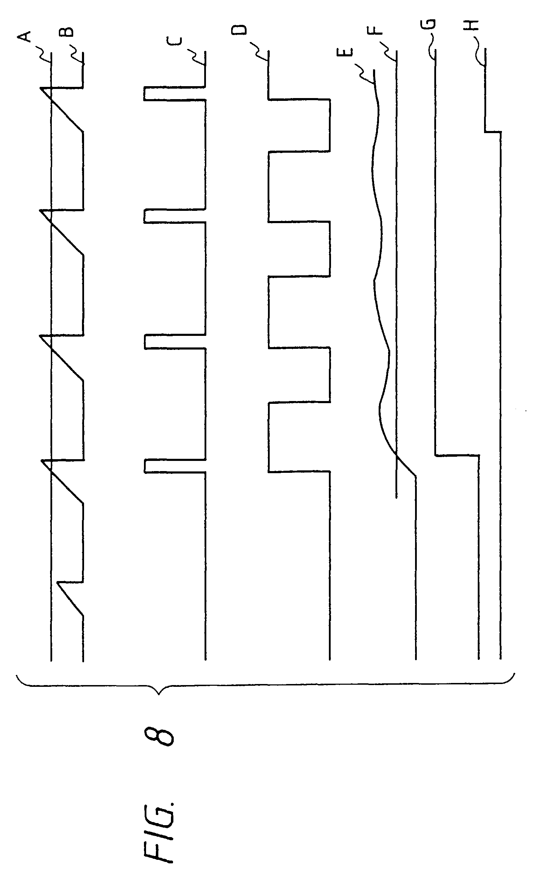

A second embodiment of a middle sensitivity, delayed action type earth leakage breaker employed in the present invention will hereinafter be described with reference to FIGS. 7 and 8. FIG. 7 is a diagram illustrative of a structure of an essential part of the earth leakage breaker. The inside of an IC1 is structurally identical to that shown in FIG. 4. In addition, FIG. 8 shows each of waveforms obtained at respective parts of a circuit shown in FIG. 7. In the present embodiment, a second frequency-characteristic applying means 74 comprises a low-pass filter composed of an IC1, a capacitor 10 and a resistor 4 both electrically connected to pins ①, ② of the IC1, a circuit from a capacitor 5 electrically connected to a pin ④ of the IC1 to a delayed action circuit 17, and the delayed action circuit 17.

When the leakage current of the commercial frequency is detected by the ZCT2, an output is produced at the pin ④ at the time that the difference in level between an input signal at the pin ① of the IC1 and an input signal at the pin ② thereof exceeds a predetermined value. A capacitor 5a is charged by the output of the pin ④. When the value of a terminal voltage B of the capacitor 5a exceeds a reference value A, a comparator 33 outputs a predetermined potential or voltage. A one-shot multi circuit 34 is operated by an output pulse C of the comparator 33 so as to output a pulse signal D therefrom. Then, the pulse signal D serves to charge a capacitor 36 through a forward diode 35. When a terminal voltage E of the capacitor 36 exceeds a reference potential or voltage F set by Vcc, a resistor 38 and a zener diode 39, a comparator 40 outputs an output signal G of a predetermined potential or voltage to the delayed action circuit 17, from which a signal H delayed by a predetermined period of time is outputted to an output circuit 18. It is therefore possible to break the corresponding electric path with the leakage current of the commercial frequency.

When the leakage current of a frequency exceeding the commercial frequency is detected by the ZCT2, the output at the pin ④ of the IC1 becomes low in level, and hence the capacitor 5a is not charged up to the reference value A of the comparator 33. Thus, the middle sensitivity, delayed action type earth leakage breaker is no longer interrupted by a high-frequency input. Incidentally, similarly to the embodiment shown in FIG. 5, a frequency used to avoid reaching the reference value A of the comparator 33 can be selected by causing the switch 26 to select either one of capacitors 5b, 5c each electrically connected in parallel with the capacitor 5a.

As has been described above, protection can be made against the earth leakage current of the commercial frequency and the earth leakage current of the frequency exceeding the commercial frequency by providing the earth leakage-current protection system obtained by combining the high sensitivity, high speed type earth leakage breaker shown in FIG. 4 and the middle sensitivity, delayed action type earth leakage breaker shown in FIG. 5 or 7 (although the present embodiment has shown and described the breaker as the delayed action type, the breaker may be used as an anti-delayed action type).

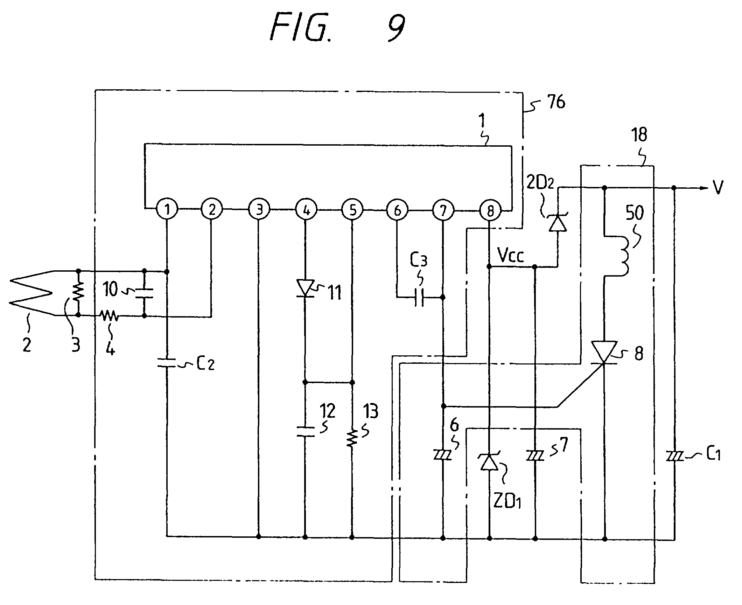

A description will now be made of a second embodiment of a high sensitivity, high speed type earth leakage breaker employed in the present invention with reference to FIG. 9. In the present embodiment, a first frequency-characteristic applying means 76 comprises an IC1, a low-pass filter electrically connected to pins ①, ② of the IC1, and a circuit from the IC1 to an output circuit 18. Elements of structure and their functions, which are common to those in the examples depicted in FIGS. 4 and 13, will be identified by like reference numerals and the description of the common elements and their functions will therefore be omitted.

Similarly to other embodiments, a ZCT2 is electrically connected to the pins ①, ② of the IC1. The output from the ZCT2 is then amplified by an amplifier incorporated in the IC1 and the thus-amplified output is applied to a pin ④ of the IC1. The output at the pin ④ is supplied via a diode 11 to a parallel circuit composed of a capacitor 12 and a resistor 13. A capacitor C₂ is used to prevent the IC1 from being malfunctioned. The point where the capacitor 12 is connected to the cathode of the diode 11 is electrically coupled to a pin ⑤ of the IC1. A pin ⑦ of the IC1 is electrically connected to an output circuit 18, and a capacitor C₃ between the pin ⑦ and a pin ⑥ is used to prevent the IC1 from being malfunctioned. The line voltage V is rendered stable with zener diodes ZD₁ and ZD₂ and then voltage-divided by the zener diode ZD₂ into a supply voltage V_{CC}, which is in turn supplied to a pin ⑧ of the IC1. In the present embodiment, the IC1 and a trip unit 50 are different in the supply voltage from each other, and hence their supply voltages are rendered stable with the zener diodes ZD₁ and ZD₂. Capacitor 7 and C₁ are used to stabilize the supply voltage V_{CC} and the line voltage V. The anode of a thyristor 8 is electrically connected to one of both terminals of a coil 50 for an unillustrated earth leakage breaker tripper, whereas the other thereof is electrically connected to the line voltage V. In addition, the gate of the thyristor 8 is electrically connected to the pin ⑦ of the IC1 and to a capacitor C₆ used to prevent the IC1 from being malfunctioned.

The operation of the high sensitivity, high speed type earth leakage breaker will now be described. When the leakage current is detected, current I_{0D} shown in FIG. 13 flows through the pin ④ of the IC1 and the potential or voltage of the capacitor 12 is varied as represented by a waveform C of FIG. 6. When such a voltage exceeds a voltage V_{TRf} shown in FIG. 13, trigger current for triggering the gate of the thyristor 8 is outputted from the pin ⑦ of the IC1. The operation of the high sensitivity, high speed type earth leakage breaker, which is carried out according to the variation in the frequency, is identical to that of the embodiment shown in FIG. 4, and the threshold value obtained from the zener diode 14 and used for the comparator 16 is given as V_{TRf} of the IC1.

According to the present embodiment, since the integrated circuit elements are employed only in the earth leakage-current detecting IC1, the current to be supplied to the circuit is less and hence a load of current to an unillustrated power circuit can be reduced. In addition, the number of components can be reduced and small-sized components may simply be used. A whole circuit for the earth leakage breaker can therefore be rendered small as well as reduction in the load of the current to the unillustrated power circuit.

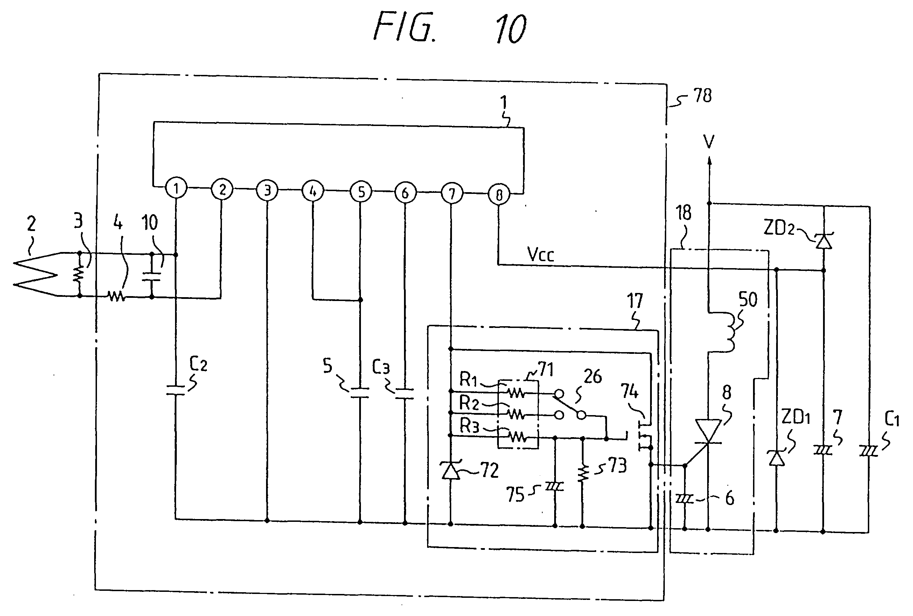

A description will now be made of a third embodiment showing a low or middle sensitivity delayed action type earth leakage breaker employed in the present embodiment with reference to FIG. 10. In the present embodiment, a second frequency-characteristic applying means 78 comprises an IC1, a low-pass filter electrically connected to pins ①, ② of the IC1, a circuit from the IC1 to a delayed action circuit 17, and the delayed action circuit 17. Elements of structure and their functions, which are common to those in the embodiments which have already been described above, will be identified by like reference numerals, and the description of the common elements and their functions will therefore be omitted.

Similarly to other embodiments described above, a ZCT2 is electrically connected to the pins ①, ② of the IC1, and the output from the ZCT2 is then amplified by an amplifier incorporated in the IC1 and the thus-amplified output is applied to a pin ④ of the IC1. A capacitor C₂ is used to prevent the IC1 from being malfunctioned. The output at the pin ④ is supplied to a capacitor 5 and also supplied to a latch circuit through a pin ⑤. A capacitor C₃ is used to prevent the IC1 from being malfunctioned. A pin ⑦ of the IC1 is electrically connected to an output circuit 18. The line voltage V is rendered stable with zener diodes ZD₁ and ZD₂ and then voltage-divided by the zener diode ZD₂ into a supply voltage V_{CC}, which is in turn supplied to a pin ⑧ of the IC1. In the present embodiment, the IC1 and a trip unit 50 are different in the supply voltage from each other, and hence their supply voltages are rendered stable with the zener diodes ZD₁ and ZD₂. Capacitors 7 and C₁ are used to stabilize the supply voltage V_{CC} and the line voltage V.

The delayed action circuit 17 is electrically connected to the pin ⑦ of the IC1, and the output from the delayed action circuit 17 is electrically connected to the gate of a thyristor 8. A description will now be made in detail of a structure of the delayed action circuit 17. Connected to the pin ⑦ of the IC1 are the anode of a zener diode 72 whose cathode is connected to the earth and a group of resistors 71. The other end of the group of resistors 71 is electrically connected directly to a parallel circuit comprising the capacitor 5 and a resistor 73 and to the gate of an FET 74, and the remaining other end thereof is electrically connected through a switch 26 to the parallel circuit and the gate thereof. The drain terminal of the FET 74 is electrically connected to the pin ⑦ of the IC1, whereas the source terminal thereof is electrically connected to the gate of the thyristor 8. In addition, a capacitor 6 is used to prevent the thyristor 8 from being malfunctioned.

The operation of the present embodiment will now be described. When the earth leakage current is detected, a constant current I_{OS} as an output is generated from the pin ⑦ of the IC1 and then flow-divided into two, which in turn flow into the zener diode 72 and the group of resistors 71. In addition, the potential or voltage of the capacitor 5 is increased so as to make the FET 74 disposed in the following stage conductive, thereby triggering the gate of the thyristor 8.

According to the present embodiment, since the integrated circuit elements are employed only in the earth leakage-current detecting IC1, and the current used to drive the delayed action circuit and the current for triggering the gate of the thyristor in the output circuit are supplied from the IC1, the current to be supplied to the circuit is less and hence a load of the current to an unillustrated power circuit can be reduced. In addition, the number of components can be reduced and small-sized components may simply be used, thereby making it possible to make a small-sized circuit for the earth leakage breaker as well as reduction in the load of the current to the above power circuit.

Incidentally, the above-described embodiments have not described a low or middle sensitivity high speed type earth leakage breaker. However, when such a breaker (for example, an earth leakage relay, an earth leakage-current detector) is used, the protection coordination can be taken and the flow of the earth leakage current of the frequency exceeding the commercial frequency can be interrupted by setting characteristic curves so as to be parallel with a threshold-value characteristic curve X or substantially parallel with the same, as indicated by the curves IV and V of FIG. 2.

Having now fully described the invention, it will be apparent to those skilled in the art that many changes and modifications can be made without departing from the spirit or scope of the invention as set forth herein.

## Claims

1. An earth leakage current protection system
characterized in comprising
a first earth leakage breaker (ELB3) having a first frequency characteristic applying means (70) and a second earth leakage breaker (ELB2) having a second frequency characteristic applying means (72), each for applying the characteristic being selected with respect to threshold values defined for the purpose of protection of the human body.

2. An earth leakage current protection system according to claim 1,
characterized in that
the first frequency characteristic applying means (70) of the first earth leakage breaker (ELB3) applies the characteristic of sensitivity of current vs. frequency which is represented by values respectively being smaller than the respective values of the threshold values defined for the purpose of protection of the human body.

3. An earth leakage current protection system according to claim 1,
characterized in that
the second frequency characteristic applying means (72) of the second earth leakage breaker (ELB2) applies the characteristic of sensitivity of current vs. frequency which is represented by values respectively being larger than and approximately being parallel with the respective values of the characteristic of the first earth leakage breaker (ELB3).

4. An earth leakage current protection system according to claim 3,
characterized in that
the second frequency characteristic applying means (72) applies a characteristic of sensitivity of current vs. frequency wherein the current values at the respective frequencies are each above the characteristic of the first earth leakage breaker (ELB3) and wherein the characteristic abruptly raises at a frequency exceeding the commercial frequency.

5. An earth leakage current protection system according to claim 1,
characterized in that
the first frequency-characteristic applying means (70) applies a characteristic of sensitivity of current vs. frequency wherein the current values at the respective frequencies are each below the respective threshold values defined for the purpose of protection of the human body, and
the second frequency characteristic applying means (72) applies a characteristic of sensitivity of current vs. frequency wherein the current values at the respective frequencies are defined for the purpose of protection of the electric path.

6. An earth leakage current protection system according to claim 5,
wherein the characteristic of the second frequency characteristic applying means (72) abruptly raises at a frequency exceeding the commercial frequency.

7. An earth leakage current protection system according to claim 1,
characterized in that
the first frequency-characteristic applying means (70) applies a characteristic of sensitivity of current vs. frequency, the characteristic being determined so as to increase in accordance with an increase of frequency within a frequency range of 100 Hz to 1 kHz and so as to have values being smaller than 135 mA at 300 Hz and smaller than 420 mA at 1 kHz.

8. An earth leakage current protection system according to claim 1,
characterized in that
the first earth leakage breaker (ELB3) is electrically connected to a load (IM2, INV) and
the second frequency characteristic applying means (72) for providing a characteristic of sensitivity of current vs. frequency which is represented by values respectively larger than the respective values of the characteristic of the frequency characteristic applying means (70).

9. An earth leakage current protection system according to claim 1,
characterized in that
the first earth leakage breaker (ELB3) is electrically connected to a load (IM2, INV) controlled using a higher frequency than the commercial frequency.

10. An earth leakage current protection system,
characterized in comprising
a first earth leakage breaker having an earth leakage-current detecting means, a frequency-characteristic applying means electrically connected to the earth-leakage current detecting means so as to apply a characteristic of sensitivity of current vs. frequency, the characteristic being determined to be in lower region in current vs. frequency characteristic plain which is divided into two regions by a current vs. frequency characteristic curve of threshold values defined for the purpose of protection of the human body, an output means electrically connected to the frequency-characteristic applying means, and
a second earth leakage breaker connected to a power source side of the first earth leakage breaker and having an earth leakage-current detecting means, a frequency-characteristic applying means electrically connected to the earth-leakage current detecting means so as to apply a characteristic of sensitivity of current vs. frequency, the characteristic being determined to be in upper region in current vs. frequency characteristic plain which is divided into two regions by a current vs. frequency characteristic curve of threshold values defined for the purpose of protection of the human body, wherein output means are electrically connected to the frequency characteristic applying means.

11. An earth leakage current protection system according to claim 10,
characterized in that
a characteristic curve of sensitivity of current vs. frequency of the first earth leakage breaker and a characteristic curve of sensitivity of current vs. frequency of the second earth leakage breaker are determined not to cross each other.

12. An earth leakage current protection system,
characterized in comprising
a first earth leakage breaker electrically connected to a load controlled using a higher frequency than the commercial frequency, and
a second earth leakage breaker connected to a power source side of the first earth leakage breaker, wherein the first earth leakage breaker having a frequency-characteristic applying means so as to apply a characteristic of sensitivity of current vs. frequency, the characteristic being determined to be in lower region in current vs. frequency characteristic plain which is divided into two regions by a current vs. frequency characteristic curve of threshold values defined for the purpose of protection of the human body.
